# EUROPÄISCHE PATENTSCHRIFT

(11) **EP 3 492 878 B1**
(45) Veröffentlichungstag und Bekanntmachung des Hinweises auf die Patenterteilung: **29.07.2020**
(21) Anmeldenummer: 18000915.1
(22) Anmeldetag: 20.11.2018
(51) Int. Cl.: G01F 1/66

(54) **VERFAHREN ZUR BESTIMMUNG DER LAUFZEIT EINES ULTRASCHALLSIGNALS IN EINEM STRÖMENDEN MEDIUM SOWIE ULTRASCHALLDURCHFLUSSMESSER**
METHOD FOR DETERMINATION OF THE TRANSIT TIME OF AN ULTRASONIC SIGNAL IN A FLOWING MEDIUM AND ULTRASONIC FLOW METER
PROCÉDÉ DE DÉTERMINATION DU TEMPS DE TRANSIT D'UN SIGNAL ULTRASONORE DANS UN MILIEU FLUIDE AINSI QUE DÉBITMÈTRE ULTRASONORE

(30) Priorität: 01.12.2017 DE 102017011145; 21.12.2017 DE 102017011861
(43) Veröffentlichungstag der Anmeldung: 05.06.2019
(73) Patentinhaber: Diehl Metering GmbH, 91522 Ansbach (DE)
(72) Erfinder: Wetzel, Marcus, DE - 91560 Heilsbronn (DE); Gaugler, Ulrich, DE - 91746 Weidenbach (DE)
(74) Vertreter: Diehl Patentabteilung

(56) Entgegenhaltungen:
- WO-A1-2016/184709
- DE-A1- 19 841 154
- DE-A1-102009 046 562
- US-A- 6 062 091
- US-A1- 2011 282 596
- US-B1- 6 435 038

## Beschreibung

Die Erfindung betrifft ein Verfahren zur Bestimmung der Laufzeit eines Ultraschallsignals in einem strömenden Medium, mit den Merkmalen des Oberbegriffs des Anspruchs 1. Ferner betrifft die vorliegende Erfindung einen Ultraschalldurchflussmesser gemäß Anspruchs 14.

### Technologischer Hintergrund

Um den Durchfluss eines strömenden Mediums zu bestimmen, werden in gattungsgemäßen Ultraschalldurchflussmessern die Laufzeiten von Schallwellen bzw. Ultraschallwellen gemessen. Die Laufzeiten werden entweder als absolute Laufzeit oder als Differenz gegenüber einer Bezugslaufzeit gemessen.

Im einfachsten Fall wird bei Laufzeitdifferenzverfahren die Laufzeit der Ultraschallwellen durch die Messung der Phasenverschiebung der Ultraschallwellen zwischen dem Sendesignal und dem Empfangssignal ermittelt. Dabei wird, bezogen auf die Fließrichtung des Mediums, ein erstes Signal in die entgegengesetzte Richtung zu einem zweiten Signal durch das Medium geschickt. Die messbaren Laufzeitunterschiede sind hier jedoch begrenzt aufgrund der periodischen Wiederholung der Phasenlage. Daher können keine Laufzeitunterschiede gemessen werden, welche größer sind als die Periodendauer der verwendeten Signalfrequenz. Deshalb gibt es hierbei Grenzen, die nicht überschritten werden dürfen, um eine nicht mehr aufzulösende Doppeldeutigkeit in den Signalen zu verhindern. Bei hohen Durchflüssen des Mediums kann dies zu Problemen führen. Zudem kann die absolute Laufzeit der Ultraschallwellen auf diese Weise nicht gemessen werden. Die Laufzeit eines Ultraschallsignals in einem Fluid ist zusätzlich von der Temperatur des Fluids abhängig. Somit kann die Notwendigkeit bestehen, dass die Fluidtemperatur erfasst wird, beispielsweise mittels eines Temperaturfühlers, und bei der Bestimmung der Durchflussmenge miteinbezogen wird.

Zur absoluten Laufzeitmessung werden üblicherweise sogenannte Pegel- und Hüllkurvenverfahren eingesetzt. Um auf diese Weise zuverlässige Messungen zu erhalten, bedarf es jedoch einer erheblich komplexen Implementierung. Hierfür werden die Implementierungen meist unter Verwendung sogenannter ASICs (Application Specific Integrated Circuits) umgesetzt.

### Nächstliegender Stand der Technik

Ein Verfahren zur Bestimmung der absoluten Laufzeit eines Ultraschallsignals in einem strömenden Medium gemäß dem Oberbegriff des Anspruchs 1 ist aus der DE 198 18 053 A1 bekannt. Es wird eine Marke im Ultraschallsignal verwendet, um die tatsächliche Ankunftszeit der Vorderflanke des Signals zu detektieren. Bei der Marke handelt es sich um eine Phasenänderungsmarke, welche im Empfangssignal durch die Detektion der Phasenänderung erfasst wird.

Ein weiteres Verfahren zur Bestimmung der absoluten Laufzeit eines Ultraschallsignals in einem strömenden Medium ist aus der DE 20 2011 005 427 U1 bekannt. Hierbei wird keine Marke in das Ultraschallsignal eingebettet. Zur absoluten Zeitzuordnung zwischen dem ausgesendeten und empfangenen Ultraschallsignal wird die Pulsbreite der ersten Welle eines empfangenen Empfangswellenzuges bei einer vorgegebenen Schwelle, ungleich den Nulldurchgängen, erfasst.

In der DE 10 2009 046 562 A1 wird ein Verfahren zur Laufzeitmessung oder zur Laufzeitdifferenzmessung in einem Raumbereich offenbart. Das Verfahren umfasst das Aussenden eines Sendepulses in Form von Ultraschallwellen zu einem bestimmten Sendezeitpunkt. Die Laufzeit wird entweder durch einen Vergleich des Sendezeitpunkts mit einer Empfangs-Zeitreferenz erfasst oder durch einen Vergleich von Ähnlichkeiten der Frequenz-Merkmale zweier in entgegengesetzter Richtung gesendeter Ultraschallpulse. Der Sendepuls weist eine sich ändernde Trägerfrequenz gemäß einem Sende-Frequenzänderungsverlauf auf. Die Laufzeit wird durch Erfassen einer Frequenzänderung des Momentanverlaufs des Empfangspulses als ein Empfangs-Frequenzänderungsverlauf erfasst.

Die DE 198 41 154 A1 beschreibt ein Verfahren zur Laufzeitmessung von Schallwellen und ein Gerätesystem zur Durchführung des Verfahrens. Hierfür wird zunächst die Phasenverschiebung zwischen dem Sende- und Empfangssignal bei zwei unterschiedlichen Schallfrequenzen ermittelt.

In der WO 2016/184709 A1 wird ein Messsystem, welches als Clamp-on-Ultraschall-Durchflussmessgerät ausgebildet ist, zum Messen einer Strömungsgeschwindigkeit und/oder einer Volumendurchflussrate offenbart. Die am Ultraschall-Empfänger empfangene Signalleistung wird verbessert, indem ein Treibersignal bzw. das Empfangssignal eine dominierende maximale spektrale Leistungsdichte aufweisende Signalkomponente enthält, welche zwischen dem Treibersignal (Sendesignal) und dem Empfangssignal nicht mehr als einen bestimmten Betrag bzw. Prozentsatz voneinander abweicht.

Die US 6,435,038 B1 beschreibt ein Ultraschall-Strömungsgeschwindigkeitsmessgerät, welches die Laufzeit mittels eines Ultraschallsignals, das eine mit einem Pseudozufallsrauschen modulierte Frequenz aufweist, misst. Hierfür wird das von einem Sender ausgesandte Ultraschallsignal an einem Empfänger synchronisiert.

### Aufgabe der vorliegenden Erfindung

Die Aufgabe der vorliegenden Erfindung besteht darin, ein neuartiges Verfahren sowie einen Ultraschalldurchflussmesser zur Verfügung zu stellen, bei dem die absolute Laufzeitbestimmung von Ultraschallsignalen bei gleichzeitig verringertem Messaufwand verbessert wird.

### Lösung der Aufgabe

Die vorstehende Aufgabe wird bei dem gattungsgemäßen Verfahren durch die Merkmale des Anspruchs 1 sowie bei dem gattungsgemäßen Ultraschalldurchflussmesser durch die Merkmale des Anspruchs 14 gelöst. Zweckmäßige Ausgestaltungen der vorliegenden Erfindung werden in den Unteransprüchen beansprucht.

Erfindungsgemäß ist zur Bestimmung der Laufzeit, vorzugsweise der absoluten Laufzeit, eines Ultraschallsignals in einem strömenden Medium ein mit einem Marker versehenes Ultraschallsignal vorgesehen, welches durch einen Ultraschallsender erzeugt wird. Anschließend wird das Ultraschallsignal durch das strömende Medium an einen Ultraschallempfänger übertragen, wo die Lage des Markers zur Bestimmung der Laufzeit des Ultraschallsignals verwendet wird, indem zur Bestimmung der Lage des Markers die Periodendauer mindestens einer selektierten Periode des Empfangssignals vermessen wird. Die Einbettung eines Markers in das Ultraschallsignal kann zu einer Abweichung der Periodendauer führen. Sofern eine Abweichung der Periodendauer bei der Vermessung des Empfangssignals registriert wird, kann dadurch auf die Lage des Markers rückgeschlossen werden. Der Zeitpunkt, zu dem der Marker in das Ultraschallsignal eingebettet worden ist, ist bekannt. Ausgehend von diesem Zeitpunkt wird die Zeit bis zur Registrierung des Markers im Empfangssignal gemessen. Dadurch wird erreicht, dass das Verfahren mit weniger technischem Aufwand realisierbar ist. Der Ultraschallsender bzw. -empfänger kann sich im Kontakt mit dem strömenden Medium, vorzugsweise direkt im Medium befinden. Für das beschriebene Verfahren werden vorteilhafterweise keine spezialisierten Mikrocontroller benötigt, um das erforderliche Sendesignal zu erzeugen. Es lassen sich somit einfach zu erzeugende Sendesignale verwenden, die ohne spezielle Peripherien, wie z. B. digital gesteuerte Oszillatoren, auskommen.

Erfindungsgemäß wird zum Empfang des Empfangssignals ein Empfangsfenster geöffnet, dessen Lage bekannt ist. Die Lage des Empfangsfensters wird in Abhängigkeit der Lage der selektierten Periode des Empfangssignals festgelegt. Die Bestimmung der Lage des Markers kann deshalb vorteilhafterweise die Bestimmung der Position der selektierten Periode bezüglich der Position des Empfangsfensters umfassen. So kann beispielsweise die Lage des Empfangsfensters angepasst werden, um z. B. sicherzustellen, dass sich das Empfangssignal über einen großen Messbereich hinweg im Empfangsfenster befindet. Ferner kann z. B. die zeitliche Ausdehnung angepasst werden, damit sich der Marker bzw. die selektierte Periode vollständig im Empfangsfenster befinden kann. So kann es zweckmäßig sein, dass das Empfangsfenster mindestens zwei vollständige Wellenperioden umfasst. Vorzugsweise kann das Empfangsfenster zwei bis drei vollständige Wellenperioden umfassen, mit dem Vorteil, dass die Detektion des Markers bzw. der kompletten selektierten Periode sichergestellt, aber gleichzeitig der Energieverbrauch limitiert wird.

Vorteilhafterweise können anhand mehrerer Ultraschallsignale mehrere Empfangssignale erzeugt werden, so dass die Möglichkeit besteht die Position des Empfangsfensters so zu verschieben, bis sich der Marker mindestens einer der Empfangssignale innerhalb des Empfangsfensters befindet. Somit ergibt sich der Vorteil, dass die Position des Empfangsfensters in einfacher Weise optimiert werden kann, womit gleichzeitig eine Signaloptimierung einhergeht.

Durch eine zusätzliche Verschiebung des Empfangsfensters in Abhängigkeit der Qualität des Empfangssignals ergibt sich der Vorteil, dass eine weitere Optimierung des Signals erfolgt. So kann sich der Marker nach der zusätzlichen Verschiebung noch innerhalb des Empfangsfensters befinden. Dadurch besteht die Möglichkeit das Empfangsfenster relativ zum aufgefundenen Marker zu verschieben. Beispielsweise kann damit das Empfangsfenster z. B. auf eine große Amplitude im Empfangssignal ausgerichtet werden, wobei sich der Marker beispielsweise am Rand des Empfangsfensters befindet. Ferner kann sich der Marker nach der zusätzlichen Verschiebung außerhalb des Empfangsfensters befinden. Dabei ist zweckmäßigerweise die relative Position des Empfangsfensters bezüglich des Markers stets bekannt. Allerdings kann somit vorteilhafterweise eine optimale Ausrichtung des Empfangsfensters stattfinden. Beispielsweise kann die Ausrichtung auf z. B. eine große Amplitude im Empfangssignal erfolgen, ohne die Einschränkung, dass sich der Marker innerhalb des Empfangsfensters befinden müsste.

In Weiterbildung der Erfindung ist es möglich, als weitere Verfahrensschritte vorzusehen, dass ein zweites ohne Marker versehenes Ultraschallsignal durch den Ultraschallsender erzeugt wird, anschließend durch das strömende Medium an den Ultraschallempfänger übertragen und am Ultraschallempfänger detektiert wird, wobei aus einem Vergleich der Periodendauer von selektierten Perioden des ersten Ultraschallsignals mit Marker und des zweiten Ultraschallsignals ohne Marker die Lage des Markers identifiziert wird. Vorteilhafterweise kann der Unterschied der Periodendauern des ersten und zweiten Empfangssignals deutlich oberhalb des systembedingten Messrauschens liegen, wodurch der Aufwand zur Detektion des Markers sinkt. Dabei kann die zeitliche Abfolge von erstem und zweitem Ultraschallsignal unerheblich sein, d. h. es kann für das Verfahren unbedeutend sein, ob zuerst ein Signal mit oder ohne Marker gesendet wird. Ferner kann die Notwendigkeit eines zusätzlichen Hardwareaufwands entfallen, was das Verfahren kostengünstig macht. So kann die bereits verbaute Hardware von Geräten, wie z. B. von Ultraschalldurchflussmessern, verwendet werden. Ferner kann das Verfahren auch mit Messschaltungen, z. B. für die Laufzeitmessung von Ultraschallsignalen, welche in derartigen Geräten bereits vorhanden sind, kombiniert werden. Das Umschalten der Messschaltungen kann z. B. durch die in einem PIC-Mikrocontroller vorhandenen Logikzellen erfolgen. Derartige Schaltungen lassen sich zudem auch mit externen Gattern realisieren.

Besonders zweckmäßig ist es, wenn das erste und zweite Ultraschallsignal die gleiche Frequenz aufweisen. Somit kann die Identifizierung des Markers erleichtert werden, da der Vergleich von äquivalenten Punkten im Empfangssignal vereinfacht wird. Die Periodendauer des ersten und zweiten Ultraschallsignals kann vorteilhafterweise für alle Empfangsperioden vor der Einbettung des Markers in das erste Ultraschallsignal identisch sein.

Indem ein Unterschied zwischen dem mit Marker und ohne Marker detektiertem Ultraschallsignal zur Zeitzuordnung der ausgesendeten Ultraschallsignale zu den empfangenen Ultraschallsignalen verwendet wird, ergibt sich der zusätzliche Vorteil, dass die absolute Laufzeit effizienter und sicherer bestimmt werden kann. Sobald die Periodendauer von äquivalenten Perioden des ersten und zweiten Ultraschallsignals voneinander abweicht, kann dies auf den eingebetteten Marker zurückgeführt werden. Die Anzahl benötigter Messungen wird deutlich reduziert, was den Energieverbrauch gleichermaßen verringert.

Vorteilhafterweise können die Ultraschallsignale mit und ohne Marker in die gleiche Richtung bezüglich der Fließrichtung des strömenden Mediums ausgesendet werden. Im Gegensatz zur Messung von Laufzeitdifferenzen ist es für die Messung der absoluten Laufzeit nicht notwendig Ultraschallsignale in entgegengesetzte Richtungen durch das strömende Medium zu schicken. Es kann somit mit Vorteil erreicht werden, dass es zu keiner Begrenzung der messbaren Laufzeit kommt. Im Gegensatz dazu ist bei Vorwärts- und Rückwärtsmessungen in entgegengesetzten Richtungen bezüglich der Fließrichtung eine absolute Grenze der verwertbaren Laufzeitdifferenz gegeben. Die absolute Grenze ergibt sich aufgrund nicht mehr aufzulösender Doppeldeutigkeiten in den Signalen, welche keine korrekte Messung mehr zulassen. Um die Messung der absoluten Laufzeit allerdings robuster gegenüber Fehldetektionen zu machen, besteht weiterhin die Möglichkeit den gesamten Messvorgang beider Ultraschallsignale mit und ohne Marker durch erneute Aussendung beider Ultraschallsignale in die entgegengesetzte Richtung zu wiederholen.

Die Ultraschallsignale weisen zweckmäßigerweise eine Mehrzahl an Perioden (Wellenperioden) auf. Somit kann mindestens eine Periode selektiert werden und deren Periodendauer bestimmt werden. Beispielsweise kann eine Einschwingphase definiert werden, in der z. B. die Amplitude noch nicht ihren Maximalwert erreicht hat. Für die Messung der Periodendauer kann entsprechend auf einen Zeitpunkt nach der Einschwingphase gewartet werden. Der Marker kann damit sicherer bestimmt werden, da die Position des Markers deutlicher in einer Änderung der Periodendauer identifizierbar ist.

Indem der Marker nach einer N-ten Periode gesetzt wird, können die gemessenen Periodendauern des Signals mit und ohne Marker bis zur N-ten Periode identisch sein. Ab der N+1-ten Periode unterscheiden sich die Periodendauern der Signale mit und ohne Marker voneinander.

Zweckmäßigerweise wird die Lage der empfangenen Wellenperiode durch den Unterschied der Periodendauern zwischen N-ter und N+1-ter Periode ermittelt. Vorteilhafterweise kann der Unterschied der Periodendauern bei den für das Verfahren verwendeten Ultraschallwandlern deutlich oberhalb des systembedingten Messrauschens liegen, was eine eindeutige Bestimmung des Übergangs von N-ter zu N+1-ter Periode zulässt.

Indem mögliche Positionen des Empfangsfensters initial bestimmt werden und das Verfahren für eine Mehrzahl der möglichen Positionen des Empfangsfensters wiederholt wird, kann die Bestimmung der absoluten Laufzeit eines Ultraschallsignals effizienter durchgeführt werden. Zur initialen Positionsbestimmung können zweckmäßigerweise die technisch möglichen Positionen des Empfangsfensters bestimmt werden. Dafür können z. B. physikalische Parameter, wie beispielsweise minimale und/oder maximale Temperatur und/oder Konsistenz des strömenden Mediums und/oder die Messstreckenlänge zwischen dem Ultraschallsender und dem Ultraschallempfänger berücksichtigt werden. Ferner kann bei vorhandenem Temperaturfühler im Messsystem der mögliche Suchbereich weiter eingeschränkt werden, indem die Messtoleranzen des Temperaturfühlers mit berücksichtig werden. Dieser Verfahrensschritt kann mehrere Einzelmessungen umfassen, da das Verfahren zur Bestimmung der absoluten Laufzeit an einer Mehrzahl der möglichen Positionen des Empfangsfensters wiederholt werden kann. Ferner können die Periodendauern stark von den Wandlercharakteristika der für das Verfahren verwendeten Ultraschallwandler abhängen. Die Periodendauern können sich darüber hinaus auch z. B. durch Variation von Druck und/oder Temperatur verändern. Auch bietet die initiale Positionsbestimmung des Empfangsfensters die Möglichkeit, sich verändernde Parameter des strömenden Mediums zu berücksichtigen, und die erwarteten Periodendauern eigenständig im Gerät, insbesondere im Ultraschalldurchflussmesser, zu kalibrieren.

In einer weiteren Ausgestaltung des Verfahrens kann der Marker eine Phasenänderung des Ultraschallsignals umfassen. Eine Phasenänderung kann beispielsweise eine Invertierung der Phase des Sendesignals oder z. B. einen Phasensprung umfassen. Beispielsweise kann eine Phasenvoreilung oder Phasenverzögerung an einer Position in das Ultraschallsignal eingebettet werden. Vorteilhafterweise kann für die Verifizierung der Position des Empfangsfensters eine charakteristische Periodendauer vermessen werden. Eine charakteristische Periodendauer einer Periode kann sich dadurch auszeichnen, dass die Periodendauer möglichst eindeutig ist und zudem von den Nachbarperioden unterschiedlich ist. Sofern lediglich eine geringfügige Abweichung der gemessenen Periodendauer zu der erwarteten bzw. vorher gemessenen Periodendauer vorliegt, kann noch von einer korrekten Positionierung des Empfangsfensters ausgegangen werden. Über die Notwendigkeit einer kompletten Neubestimmung des Empfangsfensters kann somit in einfacher Weise entschieden werden, um einem unnötigen Zeitaufwand und Energieverbrauch zu entgehen.

Vorteilhafterweise kann die Periodendauer einer Periode der empfangenen Ultraschallsignale mittels einer Einzelmessung vermessen werden, wodurch das Strömungsrauschen keinen Einfluss auf die Messwerte hat. Dies hat zum Vorteil, dass die Messung deutlich rauschärmer ist, weshalb die Laufzeit wesentlich genauer bestimmt werden kann. Zudem kann damit die Anzahl der benötigten Messungen verringert werden, wodurch der Energieverbrauch gesenkt werden kann.

Die Schallgeschwindigkeit hat im Medium, insbesondere Wasser, eine hohe Temperaturabhängigkeit. Indem die absolute Laufzeit der Ultraschallsignale ermittelt wird, ergibt sich der Vorteil, dass auf zusätzliche Temperaturmesswerte verzichtet werden kann. Bei einem Ultraschalldurchflussmesser, bei dem das Verfahren realisiert ist, kann somit auf einen Temperaturfühler verzichtet werden, was den technischen Aufwand und die Kosten senken kann.

Nebengeordnet beansprucht die vorliegende Erfindung zudem einen Ultraschalldurchflussmesser. Der erfindungsgemäße Ultraschalldurchflussmesser ist gemäß mindestens einem der Verfahrensansprüche betreibbar. So kann der Ultraschalldurchflussmesser zweckmäßigerweise ein Gehäuse mit einem Eingang und einem Ausgang umfassen. Ferner kann es besonders zweckmäßig sein, dass der Ultraschalldurchflussmesser mindestens einen, vorzugsweise zwei, Ultraschallwandler umfasst. Die Wandler können sich im Kontakt mit dem Medium, vorzugsweise direkt im Medium befinden. Um die Position der Messstrecke innerhalb des strömenden Mediums festzulegen, besteht die Möglichkeit Reflektoren innerhalb des strömenden Mediums anzuordnen. Die Ausrichtung der Messstrecke bezüglich der Fließrichtung des strömenden Mediums kann dabei entsprechend der Ausgestaltung des Verfahrens gewählt werden.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: stark vereinfachte Darstellung eines gattungsgemäßen Ultraschalldurchflussmessers;
- Fig. 2A-C: beispielhafte Darstellung der Bestimmung des Empfangsfensters;
- Fig. 3A-D: beispielhafte Darstellungen möglicher Anregungssignale ohne und mit Marker;
- Fig. 4: beispielhafte Darstellung eines Vergleichs der Periodendauern zwischen einem Signal mit Marker und einem Signal ohne Marker.

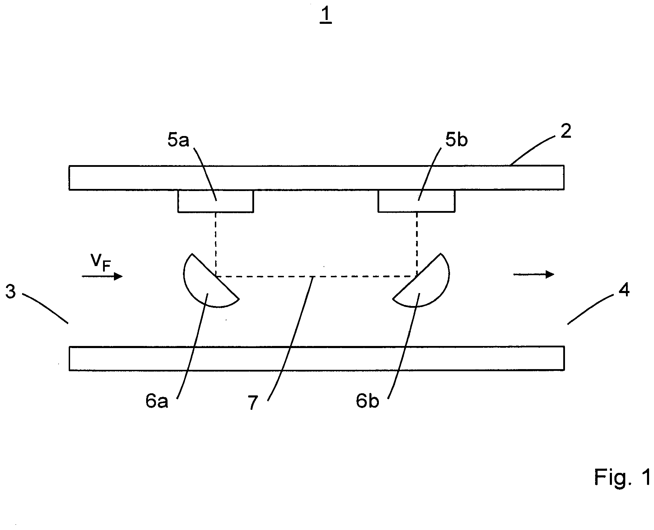

Fig. 1 zeigt einen gattungsgemäßen Ultraschalldurchflussmesser 1. Das Gehäuse 2 weist einen Eingang 3 sowie einen Ausgang 4 auf. Die Fließrichtung des strömenden Mediums ist mit den Pfeilen am Eingang 3 und Ausgang 4 gezeigt. Das Medium fließt beispielsweise mit einer Fließgeschwindigkeit v_{F}. Die Messeinrichtung des Ultraschalldurchflussmessers 1 ist beispielhaft mit zwei Ultraschallwandlern 5a bzw. 5b dargestellt. Die Ultraschallwandler 5a bzw. 5b befinden sich im Kontakt mit dem strömenden Medium. Der Weg der Ultraschallsignale 10a bzw. 11a wird an den Reflektoren 6a bzw. 6b z. B. zu einer U-förmigen Messstrecke 7 umgelenkt. Ein Teil der Messstrecke 7 verläuft parallel zur Fließrichtung des strömenden Mediums. Ultraschallsignale mit 12 und ohne Marker 11a bzw. 10a können beide in die gleiche Richtung bezüglich der Fließrichtung des strömenden Mediums ausgesendet werden, d. h. vom selben Ultraschallwandler 5a bzw. 5b ausgesandt werden.

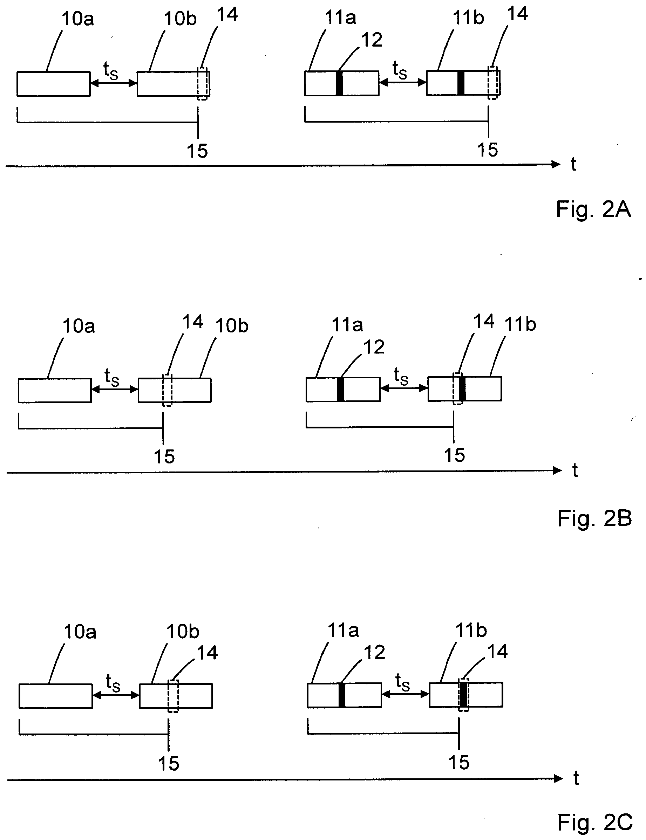

Eine beispielhafte Bestimmung der Anfangsposition 15 des Empfangsfensters 14 ist in Fig. 2A-C dargestellt. Zur initialen Positionsbestimmung benötigt das Verfahren mehrere Einzelmessungen. Hierfür werden zunächst die technisch möglichen Positionen 15 des Empfangsfensters 14 bestimmt. Berücksichtigt werden dabei z. B. physikalische Parameter, wie beispielsweise die Mediumstemperatur und/oder die Messstreckenlänge. Im Anschluss werden für eine Mehrzahl der möglichen Positionen 15 des Empfangsfensters 14 jeweils zwei aufeinanderfolgende Messungen in die jeweils gleiche Richtung bezüglich der Fließrichtung des strömenden Mediums durchgeführt. Die erste der zwei aufeinanderfolgenden Teilmessungen verwendet ein Signal 10a ohne Marker. Für die zweite Teilmessung wird ein Signal 11a gleicher Frequenz wie die erste Teilmessung verwendet. Allerdings ist das Signal 11a der zweiten Teilmessung mit einem Marker 12 versehen. Der Marker 12 kann dabei eine Phasenänderung des Ultraschallsignals 11a umfassen. So kann beispielsweise die Phase des Sendesignals 11a nach einer bestimmten, N-ten gesendeten Periode, z. B. der 6. Periode, invertiert sein. Beide Ultraschallsignale 10a bzw. 11a weisen dabei eine Mehrzahl an Perioden auf.

In Fig. 2A ist beispielhaft eine erste Abfolge von zwei aufeinanderfolgenden Messungen gezeigt. Zunächst wird hierfür ein erstes Signal 10a ohne Marker ausgesandt. Für die Strecke von einem Ultraschallwandler 5a zum anderen Ultraschallwandler 5b benötigt das Ultraschallsignal 10a die Zeit ts. Diese Zeit ts hängt unter anderem von der Mediumstemperatur und/oder Mediumskonsistenz und/oder der Länge der Messstrecke 7 ab. Das erste Signal 10a ohne Marker könnte demnach nach der Zeit t_{S} als Empfangssignal 10b am zweiten Ultraschallwandler 5b empfangen werden, sofern auch ein Empfangsfenster 14 entsprechend geöffnet worden ist. Nach dem ersten Signal 10a ohne Marker wird ein zweites Signal 11a mit Marker 12 gesendet. Dieses könnte ebenfalls nach der Zeit t_{S} als Empfangssignal 11b mit Marker 12 empfangen werden. Das Empfangsfenster 14 ist für den Marker 12 des zweiten Signals 11b mit Marker 12 in Fig. 2A zeitlich zu spät positioniert, so dass der Marker 12 nicht in das Empfangsfenster 14 fällt. Die zeitliche Länge des Empfangsfensters 14 kann zweckmäßigerweise länger sein, als eine Periodendauer der Empfangssignale 10b, 11b. Andernfalls könnte ein Teil der Periode abgeschnitten werden. Um sicherzustellen, dass eine vollständige Periode der Empfangssignale 10b, 11b in das Empfangsfenster 14 fällt, kann das Empfangsfenster 14 vorteilhafterweise eine Breite von zwei Periodendauern aufweisen. Beispielsweise kann das Empfangsfenster 14 für 2 µs geöffnet werden. Die Sende- bzw. Empfangssignale mit und ohne Marker 10a, 11a, 10b, 11b sind von Anfang bis zur Position des Markers 12 identisch. Der zeitliche Abstand zwischen der Aussendung des ersten Signals 10a und des zweiten Signals 11a kann zweckmäßigerweise so gewählt werden, dass zwischen den empfangenen Signalen 10b und 11b differenziert werden kann. So besteht beispielsweise die Möglichkeit das zweite Signal 11a erst dann auszusenden, wenn das Empfangsfenster 14 für das erste Signal 10b geschlossen worden ist.

Die Position 15 des Empfangsfensters 14 wird so lange verschoben, bis der Marker 12, welcher eine charakteristische Änderung der Periodendauer darstellt, getroffen wird. Die Anfangsposition 15 des Empfangsfensters 14 befindet sich in Fig. 2B an einem früheren Zeitpunkt, bezogen auf die Aussendezeitpunkte der Ultraschallsignale 10a bzw. 11a. Die Zeit ts, die ein Ultraschallsignal von einem Ultraschallwandler 5a zum anderen Ultraschallwandler 5b benötigt ist in diesem Beispiel unverändert, da es beispielsweise zu keiner Änderung des Volumenstromes und/oder der Temperatur gekommen ist. In diesem Beispiel ist die Position 15 des Empfangsfensters 14 allerdings zu früh gewählt, bezogen auf die Position des Markers 12. Es kann zwar beispielsweise ein Teil der mit Marker 12 versehenen Periode in das Empfangsfenster 14 fallen, allerdings kann eine eindeutige Bestimmung der Position des Markers 12 dadurch nicht erfolgen bzw. es könnten Fehler bei der Bestimmung der Laufzeit auftreten.

Um die Position 15 des Empfangsfensters 14 bezüglich des Markers 12 zu verbessern, wird beispielsweise die Position 15 des Empfangsfensters 14 so optimiert, dass sich der Marker 12 in der Mitte bzw. möglichst mittig bezüglich der zeitlichen Ausdehnung des Empfangsfensters 14 befindet. Zweckmäßigerweise befindet sich die gesamte Periode des Markers 12 innerhalb des Empfangsfensters 14. Diese Optimierung kann beispielsweise durch iterative Verschiebung des Empfangsfensters 14 um die vermutete Position des Markers 12 geschehen. In Fig. 2C ist eine entsprechend optimierte Position 15 des Empfangsfensters 14 gezeigt. Über Einzelmessungen kann so die optimale Lage des Empfangsfensters 14 bestimmt werden. Vorteilhafterweise können die Signale in den entsprechenden Empfangsfenstern 14 der Empfangssignale mit und ohne Marker 10b, 11b verglichen werden, um die Detektion des Markers 12 zu vereinfachen. Sobald die Lage des Markers 12 und damit die Position 15 des Empfangsfensters 14 bezüglich der Sende- bzw. Empfangssignale mit bzw. ohne Marker 10a, 10b, 11a, 11b bekannt sind, besteht die Möglichkeit das Empfangsfenster 14 an eine andere Position zu verschieben. Somit kann für die Bestimmung der Laufzeit und damit für die Durchflussmessung des strömenden Mediums eine beliebige Position innerhalb der Empfangssignale mit und/oder ohne Marker 10b, 11b verwendet werden, welche von der Position des Markers 12 unterschiedlich ist. Beispielsweise kann das Empfangsfenster 14 von der Position des Markers 12 aus um zwei Perioden verschoben werden. Zwischen der Position zur Detektion des Markers 12 und der Position zur Durchflussmessung kann damit auf einfache Weise umgeschaltet werden. Um während der Durchflussmessung die Position 15 des Empfangsfensters 14 zu verifizieren, kann vorteilhafterweise auf die bekannte, bereits bestimmte Position des Markers 12 umgeschaltet werden und die Periode des Markers 12 als charakteristische Periodendauer vermessen werden. Sofern die charakteristische Periodendauer der bereits bestimmten Periodendauer des Markers 12 entspricht, ist keine erneute Bestimmung der Position 15 des Empfangsfensters 14 notwendig.

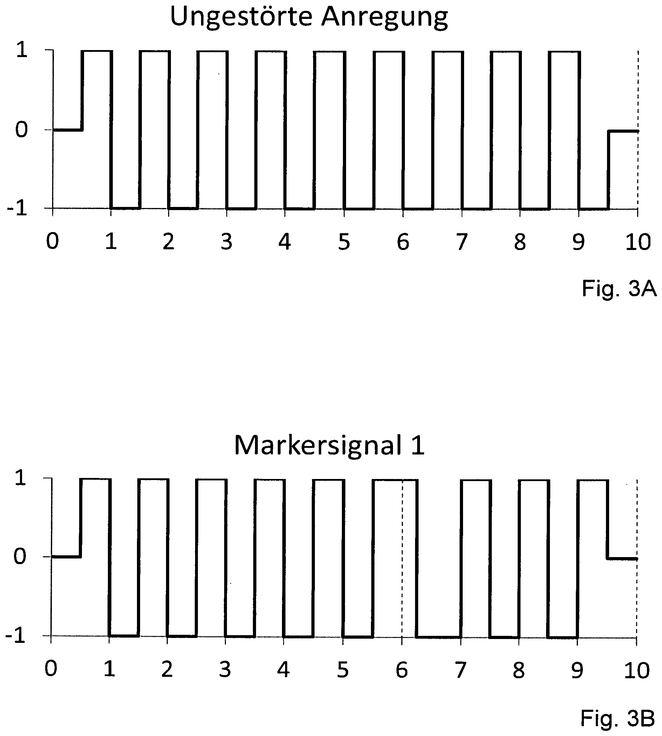

Mögliche beispielhafte Darstellungen von Anregesignalen, mit welchen der Ultraschallwandler 5a bzw. 5b betrieben wird, um Ultraschallsignale ohne und mit Marker 10a bzw. 11a zu generieren, sind in den Fig. 3A-D gezeigt. Eine beispielhafte Darstellung der Anregung eines Ultraschallwandlers 5a bzw. 5b ohne einen Marker zu setzen ist in Fig. 3A gezeigt. Die Anregung erfolgt hierbei über ein Rechtecksignal. Die y-Achse zeigt die Anregungsamplitude mit beliebigen Einheiten. Auf der x-Achse sind die entsprechenden Perioden zeitlich eingetragen.

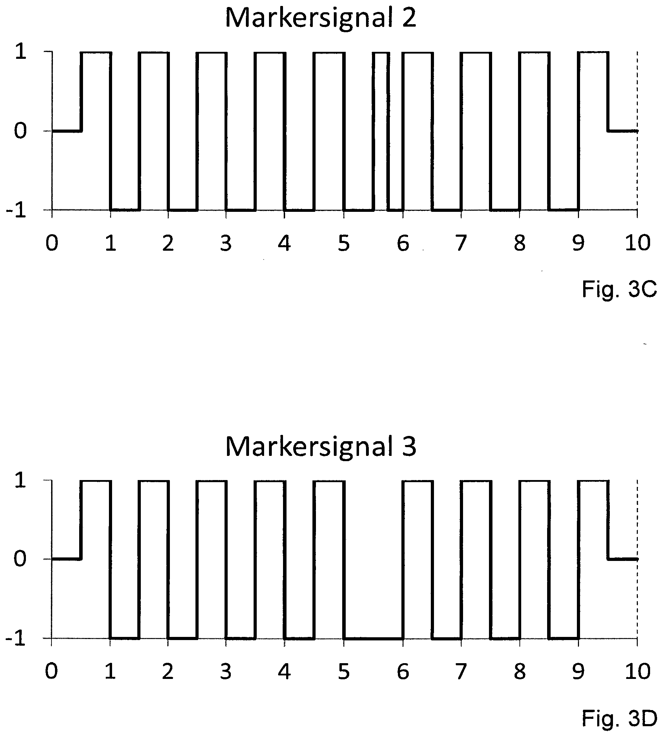

In den Fig. 3B bis 3D sind Anregesignale mit Marker 12 gezeigt, welche jeweils eine beispielhafte Störstelle aufweisen. Die Marker 12 im ausgesandten Ultraschallsignal 11a werden beispielsweise durch diese Störstellen im Anregesignal bedingt. Die Störstellen sind so gewählt, dass z. B. eine Invertierung der Phase des Sendesignals 11a nach der 6. gesendeten Periode auftritt. Die Störstelle in Fig. 3B ist beispielsweise eine verlängerte Anregung der 6. Periode und ein Aussetzen der Anregung für die 7. Periode. In Fig. 3C ist die Störstelle als verkürzte Anregung der 6. Periode ausgestaltet. Nach der 6. Periode ist die Phase des Sendesignals 11a invertiert. In Fig. 3D ist die Störstelle dergestalt, dass das Anregungssignal für die 6. Periode ausgesetzt wird. Ab der 7. Periode ist auch hier die Phase des Sendesignals 11a invertiert.

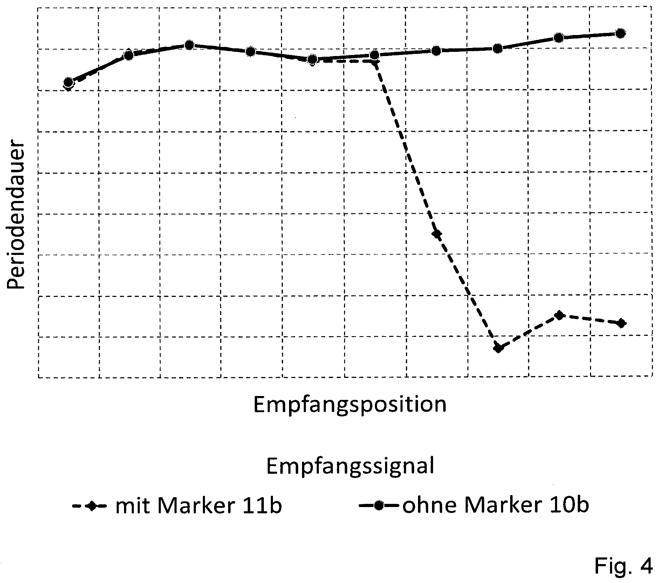

In Fig. 4 ist der Vergleich der Periodendauern zwischen einem empfangenen Signal mit Marker 11b und einem empfangenen Signal ohne Marker 10b beispielhaft dargestellt. Jeder Punkt repräsentiert die Periodendauer einer bestimmten Periode in dem jeweiligen Signal 11b bzw. 10b. Zur Bestimmung der absoluten Laufzeit werden ein erstes Signal mit Marker 11b und ein zweites Signal mit gleicher Frequenz ohne Marker 10b verwendet. Die Periodendauern können Schwankungen unterliegen, die beispielsweise durch Temperatureinflüsse und/oder Einschwingvorgänge bedingt werden. Zum Vergleich der zwei Signale 11b bzw. 10b werden die Periodendauern beispielsweise an äquivalenten Punkten bestimmt. Die Messung der Periodendauer kann dabei beispielsweise an einer positiv steigenden Flanke der empfangenen Signale 11b bzw. 10b durchgeführt werden. Beispielhaft ist in Fig. 4 der Marker 12 nach der 6. gesendeten Periode gesetzt worden. Die gemessenen Periodendauern der Empfangssignale mit und ohne Marker 11b bzw. 10b sind für die Empfangsperioden 1 bis 6 identisch. Ab der 7. Periode unterscheiden sich die gemessenen Periodendauern der Empfangssignale 11b bzw. 10b. Es ist somit möglich die Position der 6. bzw. 7. Empfangsperiode entsprechend der Position 15 des Empfangsfensters 14 (vgl. Fig. 2A - 2C) zu bestimmen. Falls sich die Position des Übergangs von 6. zu 7. Empfangsperiode zeitlich am Anfang des Empfangsfensters 14 befindet, wird das Empfangsfenster 14 bei der darauffolgenden Messung zeitlich früher geöffnet, um die empfangenen Signale 11b bzw. 10b im Empfangsfenster zu zentrieren. Analog dazu, wird das Empfangsfenster 14 in der Folgemessung zeitlich später geöffnet, falls sich die Position des Übergangs von 6. zu 7. Empfangsperiode zeitlich am Ende des Empfangsfensters 14 befindet. Durch die Bestimmung des Markers 12 kann somit die absolute Laufzeit der Ultraschallsignale 10b bzw. 11b bestimmt werden.

## Patentansprüche

1. Verfahren zur Bestimmung der Laufzeit eines Ultraschallsignals in einem strömenden Medium, wobei
ein mit einem Marker (12) versehenes Ultraschallsignal (11a) durch einen Ultraschallsender (5a) erzeugt wird,
das Ultraschallsignal (11a) durch das strömende Medium an einen Ultraschallempfänger (5b) übertragen wird, und
die Lage des Markers (12) zur Bestimmung der Laufzeit des Ultraschallsignals (11b) verwendet wird, wobei
zum Empfang des Empfangssignals (11b) ein Empfangsfenster (14) geöffnet wird, wobei der Marker (12) zu einem vorbekannten Zeitpunkt in das Ultraschallsignal (11 a) eingebettet wird,
**dadurch gekennzeichnet, dass**
zur Bestimmung der Lage des Markers (12) die Periodendauer mindestens einer selektierten Periode des Empfangssignals (11b) vermessen wird, und
die Lage des Empfangsfensters (14) in Abhängigkeit der Lage der selektierten Periode des Empfangssignals (11b) festgelegt wird, indem
ausgehend von dem Zeitpunkt der Einbettung die Zeit bis zur Registrierung des Markers (12) im Empfangssignal (11b) gemessen wird.

2. Verfahren nach Anspruch 1, **dadurch gekennzeichnet, dass** anhand mehrerer Ultraschallsignale (11) mehrere Empfangssignale (11b) erzeugt werden, und die Position des Empfangsfensters (14) so verschoben wird, bis sich der Marker (12) mindestens einer der Empfangssignale (11b) innerhalb des Empfangsfensters (14) befindet.

3. Verfahren nach Anspruch 2, **dadurch gekennzeichnet, dass** zusätzlich eine Verschiebung des Empfangsfensters (14) in Abhängigkeit der Qualität des Empfangssignals (11b) erfolgt.

4. Verfahren nach einem der Ansprüche 1 bis 3, **dadurch gekennzeichnet, dass**
ein zweites ohne Marker versehenes Ultraschallsignal (10a) durch den Ultraschallsender (5a) erzeugt wird,
das zweite Ultraschallsignal (10a) durch das strömende Medium an den Ultraschallempfänger (5b) übertragen und am Ultraschallempfänger (5b) detektiert wird, und
aus einem Vergleich der Periodendauern von selektierten Perioden des ersten Ultraschallsignals mit Marker (11b) und des zweiten Ultraschallsignals ohne Marker (10b) die Lage des Markers (12) bestimmt wird, wobei das Ultraschallsignal mit Marker (11a, 11b) und ohne Marker (10a, 10b) bevorzugt die gleiche Frequenz aufweist.

5. Verfahren nach Anspruch 4, **dadurch gekennzeichnet, dass** ein Unterschied zwischen dem mit Marker (12) und ohne Marker detektiertem Ultraschallsignal (11b, 10b) zur Zuordnung der ausgesendeten Ultraschallsignale (10a, 11a) zu den empfangenen Ultraschallsignalen (10b, 11b) verwendet wird.

6. Verfahren nach einem der Ansprüche 4 oder 5, **dadurch gekennzeichnet, dass** die Ultraschallsignale mit und ohne Marker (11a, 10a) in die gleiche Richtung bezüglich der Fließrichtung des strömenden Mediums ausgesendet werden.

7. Verfahren nach einem der vorhergehenden Ansprüche, **dadurch gekennzeichnet, dass** die Ultraschallsignale (10a, 10b, 11a, 11b) eine Mehrzahl an Perioden aufweisen.

8. Verfahren nach einem der vorhergehenden Ansprüche, **dadurch gekennzeichnet, dass** der Marker (12) nach einer N-ten Periode gesetzt wird, wobei vorzugsweise vorgesehen ist, **dass** die Lage der empfangenen Wellenperiode durch den Unterschied der Periodendauer zwischen N-ter und N+1-ter Periode ermittelt wird.

9. Verfahren nach einem der vorhergehenden Ansprüche, **dadurch gekennzeichnet, dass** mögliche Positionen (15) des Empfangsfensters (14) bestimmt werden und das Verfahren für eine Mehrzahl der möglichen Positionen (15) des Empfangsfensters (14) wiederholt wird.

10. Verfahren nach einem der vorhergehenden Ansprüche, **dadurch gekennzeichnet, dass** der Marker (12) eine Phasenänderung des Ultraschallsignals (11a, 11b) umfasst.

11. Verfahren nach einem der vorhergehenden Ansprüche, **dadurch gekennzeichnet, dass** für die Verifizierung der Position (15) des Empfangsfensters (14) eine charakteristische Periodendauer vermessen wird.

12. Verfahren nach einem der vorhergehenden Ansprüche, **dadurch gekennzeichnet, dass** die Periodendauer einer Periode der empfangenen Ultraschallsignale (10b, 11b) mittels einer Einzelmessung vermessen wird.

13. Verfahren nach einem der vorhergehenden Ansprüche, **dadurch gekennzeichnet, dass** die absolute Laufzeit der Ultraschallsignale (10b, 11b) ermittelt wird.

14. Ultraschalldurchflussmesser, **dadurch gekennzeichnet, dass** dieser gemäß einem Verfahren nach einem der vorhergehenden Ansprüche betreibbar ist.

## Claims

1. Method for determining the time of flight of an ultrasound signal in a flowing medium, wherein
an ultrasound signal (11a) provided with a marker (12) is generated by an ultrasound emitter (5a),
the ultrasound signal (11a) is transmitted through the flowing medium to an ultrasound receiver (5b), and
the location of the marker (12) is used to determine the time of flight of the ultrasound signal (11b), wherein
in order to receive the reception signal (11b), a reception window (14) is opened, wherein the marker (12) is embedded in the ultrasound signal (11a) at a previously known time,
**characterized in that**
in order to determine the location of the marker (12), the period duration of at least one selected period of the reception signal (11b) is measured, and
the location of the reception window (14) is established as a function of the location of the selected period of the reception signal (11b) by
measuring the time from the embedding time to the registration of the marker (12) in the reception signal (11b).

2. Method according to Claim 1, **characterized in that** a plurality of reception signals (11b) are generated with the aid of a plurality of ultrasound signals (11), and the position of the reception window (14) is displaced until the marker (12) of at least one of the reception signals (11b) lies inside the reception window (14).

3. Method according to Claim 2, **characterized in that** a displacement of the reception window (14) is additionally carried out as a function of the quality of the reception signal (11b).

4. Method according to one of Claims 1 to 3, **characterized in that**
a second ultrasound signal (10a) provided without a marker is generated by the ultrasound emitter (5a),
the second ultrasound signal (10a) is transmitted through the flowing medium to the ultrasound receiver (5b) and is detected at the ultrasound receiver (5b), and
the location of the marker (12) is determined from a comparison of the period durations of selected periods of the first ultrasound signal with a marker (11b) and of the second ultrasound signal without a marker (10b), wherein the ultrasound signals with a marker (11a, 11b) and without a marker (10a, 10b) preferably have the same frequency.

5. Method according to Claim 4, **characterized in that** a difference between the ultrasound signals (11b, 10b) detected with and without a marker (12) is used for allocating the emitted ultrasound signals (10a, 11a) to the received ultrasound signals (10b, 11b) .

6. Method according to either of Claims 4 and 5, **characterized in that** the ultrasound signals with and without a marker (11a, 10a) are emitted in the same direction in relation to the flow direction of the flowing medium.

7. Method according to one of the preceding claims, **characterized in that** the ultrasound signals (10a, 10b, 11a, 11b) comprise a plurality of periods.

8. Method according to one of the preceding claims, **characterized in that** the marker (12) is set after an N^{th} period, wherein provision is preferably made for the location of the received wave period to be determined by the difference in the period duration between the N^{th} and N+1^{th} period.

9. Method according to one of the preceding claims, **characterized in that** possible positions (15) of the reception window (14) are determined, and the method is repeated for a multiplicity of the possible positions (15) of the reception window (14).

10. Method according to one of the preceding claims, **characterized in that** the marker (12) comprises a phase change of the ultrasound signal (11a, 11b).

11. Method according to one of the preceding claims, **characterized in that** a characteristic period duration is measured for verification of the position (15) of the reception window (14).

12. Method according to one of the preceding claims, **characterized in that** the period duration of a period of the received ultrasound signals (10b, 11b) is measured by means of a single measurement.

13. Method according to one of the preceding claims, **characterized in that** the absolute time of flight of the ultrasound signals (10b, 11b) is determined.

14. Ultrasonic flow meter, **characterized in that** it can be operated according to a method according to one of the preceding claims.

## Revendications

1. Procédé de détermination du temps de transit d'un signal ultrasonore dans un milieu fluide, dans lequel un signal ultrasonore (11a) doté d'un marqueur (12) est généré par un émetteur d'ultrasons (5a),
le signal ultrasonore (11a) est transmis à travers le milieu fluide à un récepteur d'ultrasons (5b), et
la position du marqueur (12) est utilisée pour déterminer le temps de transit du signal ultrasonore (11b), dans lequel
une fenêtre de réception (14) est ouverte pour la réception du signal de réception (11b), dans lequel le marqueur (12) est inséré dans le signal ultrasonore (11a) à un instant préalablement connu,
**caractérisé en ce que**,
pour déterminer la position du marqueur (12), la durée d'au moins une période sélectionnée du signal de réception (11b) est mesurée, et
la position de la fenêtre de réception (14) est déterminée en fonction de la position de la période sélectionnée du signal de réception (11b) en mesurant, à partir de l'instant de l'insertion, le temps s'écoulant jusqu'à ce que le marqueur (12) soit intégré dans le signal de réception (11b).

2. Procédé selon la revendication 1, **caractérisé en ce que** plusieurs signaux de réception (11b) sont générés au moyen de plusieurs signaux ultrasonores (11), et **en ce que** la position de la fenêtre de réception (14) est décalée jusqu'à ce que le marqueur (12) d'au moins l'un des signaux de réception (11b) se trouve à l'intérieur de la fenêtre de réception (14).

3. Procédé selon la revendication 2, **caractérisé en ce qu'**un décalage de la fenêtre de réception (14) est en outre effectué en fonction de la qualité du signal de réception (11b).

4. Procédé selon l'une des revendications 1 à 3, **caractérisé**
**en ce qu'**un deuxième signal ultrasonore (10a) non doté de marqueur est généré par l'émetteur d'ultrasons (5a), **en ce que** le deuxième signal ultrasonore (10a) est transmis à travers le milieu fluide au récepteur d'ultrasons (5b) et est détecté au niveau du récepteur d'ultrasons (5b), et
**en ce que** la position du marqueur (12) est déterminée à partir d'une comparaison des durées de périodes sélectionnées du premier signal ultrasonore avec marqueur (11b) et du deuxième signal ultrasonore sans marqueur (10b), dans lequel les signaux ultrasonores avec marqueur (11a, 11b) et sans marqueur (10a, 10b) présentent de préférence la même fréquence.

5. Procédé selon la revendication 4, **caractérisé en ce qu'**une différence entre les signaux ultrasonores (11b, 10b) détectés avec marqueur (12) et sans marqueur est utilisée pour associer les signaux ultrasonores émis (10a, 11a) aux signaux ultrasonores reçus (10b, 11b).

6. Procédé selon l'une des revendications 4 ou 5, **caractérisé en ce que** les signaux ultrasonores avec et sans marqueurs (11a, 10a) sont émis dans la même direction par rapport à la direction d'écoulement du milieu fluide.

7. Procédé selon l'une des revendications précédentes, **caractérisé en ce que** les signaux ultrasonores (10a, 10b, 11a, 11b) présentent une pluralité de périodes.

8. Procédé selon l'une des revendications précédentes, **caractérisé en ce que** le marqueur (12) est validé après une Nième période, dans lequel il est de préférence prévu que la position de la période de l'onde reçue est déterminée par la différence de durée entre les Nème et N+1ème périodes.

9. Procédé selon l'une des revendications précédentes, **caractérisé en ce que** des positions possibles (15) de la fenêtre de réception (14) sont déterminées et **en ce que** le procédé est répété pour une pluralité des positions possibles (15) de la fenêtre de réception (14).

10. Procédé selon l'une des revendications précédentes, **caractérisé en ce que** le marqueur (12) comprend une modification de la phase du signal ultrasonore (11a, 11b).

11. Procédé selon l'une des revendications précédentes, **caractérisé en ce qu'**une durée de période caractéristique est mesurée pour la vérification de la position (15) de la fenêtre de réception (14).

12. Procédé selon l'une des revendications précédentes, **caractérisé en ce que** la durée d'une période des signaux ultrasonores reçus (10b, 11b) est mesurée au moyen d'une mesure unique.

13. Procédé selon l'une des revendications précédentes, **caractérisé en ce que** le temps de transit absolu des signaux ultrasonores (10b, 11b) est déterminé.

14. Débitmètre à ultrasons, **caractérisé en ce qu'**il peut être utilisé conformément à un procédé selon l'une des revendications précédentes.
